# EUROPÄISCHE PATENTSCHRIFT

(11) **EP 4 006 506 B1**
(45) Veröffentlichungstag und Bekanntmachung des Hinweises auf die Patenterteilung: **08.01.2025**
(21) Anmeldenummer: 20209980.0
(22) Anmeldetag: 26.11.2020
(51) Int. Cl.: G01H 13/00, G01N 21/17, G01N 29/036, G01N 29/24, G01N 29/32, G01N 29/024, G01N 29/032, G01N 29/34, G01N 29/46

(54) **VERFAHREN ZUM BESTIMMEN EINER EIGENSCHAFT EINES PROBENFLUIDS ODER EINER RESONANZFREQUENZ EINER RESONATORZELLE**
METHOD FOR DETERMINING A PROPERTY OF A SAMPLE FLUID OR A RESONANCE FREQUENCY OF A RESONATOR CELL
PROCÉDÉ DE DÉTERMINATION D'UNE PROPRIÉTÉ D'UN FLUIDE D'ÉCHANTILLONNAGE OU D'UNE FRÉQUENCE DE RÉSONANCE D'UNE CELLULE DE RÉSONATEUR

(43) Veröffentlichungstag der Anmeldung: 01.06.2022
(73) Patentinhaber: Fraunhofer-Gesellschaft zur Förderung der angewandten Forschung e.V., 80686 München (DE)
(72) Erfinder: WEBER, Christian, 79110 Freiburg (DE); KAPP, Johannes, 79110 Freiburg (DE); SCHMITT, Katrin, 79110 Freiburg (DE)
(74) Vertreter: WSL Patentanwälte Partnerschaft mbB

(56) Entgegenhaltungen:
- WO-A1-2018/096091
- CN-A- 109 490 216
- MIKLOS A ET AL: "An experimental methodology for characterizing the responsivity of the photoacoustic cell for gases at reduced pressure by means of the vibrating strip as the calibrating sound source", MEASUREMENT SCIENCE AND TECHNOLOGY, IOP, BRISTOL, GB, vol. 2, no. 10, 1 October 1991 (1991-10-01), pages 957 - 962, XP020065110, ISSN: 0957-0233, DOI: 10.1088/0957-0233/2/10/012

## Beschreibung

Die vorliegende Erfindung betrifft ein Verfahren, mit dem eine Amplitude oder Phase eines akustischen Antwortsignals eines akustischen Resonators bestimmt wird. Die vorliegende Erfindung betrifft auch ein auf dem vorgenannten Verfahren aufbauendes photoakustisches Verfahren zum Bestimmen einer Eigenschaft eines Probenfluides. Des Weiteren betrifft die vorliegende Erfindung eine Vorrichtung, mit der die vorgenannten Verfahren durchgeführt werden können, sowie eine Verwendung dieser Vorrichtung zur Abgasmessung in einem Kraftfahrzeug oder zur Schadstoffmessung in der Umgebungsluft.

Der Schutz der Umwelt vor Schadstoffen war und ist ein äußerst wichtiges Thema, insbesondere mit Blick auf die Luftverschmutzung in Großstädten und die Herausforderungen des Klimawandels. Vor diesem Hintergrund wächst die Nachfrage nach Analyseverfahren und -vorrichtungen zum Bestimmen der Konzentration von Schadstoffen in Fluiden. Dies betrifft insbesondere Schadstoffe in gasförmiger Form wie Stickoxide oder Kohlenstoffdioxid, da ersteres eine unmittelbare gesundheitlich schädigende Wirkung auf Menschen hat und letzteres maßgeblich zum Treibhauseffekt in der Atmosphäre und somit zum Klimawandel beiträgt. Zur Bestimmung der Konzentration dieser und anderer Gase in einem Gasgemisch werden u. a. photoakustische Verfahren eingesetzt.

Bei einem photoakustischen Verfahren wird ein Fluidgemisch, insbesondere ein Gasgemisch, für das die Konzentration eines Probengases (wie beispielsweise Stickstoffdioxid) bestimmt werden soll, mit einer einfallenden elektromagnetischen Strahlung bestrahlt, wobei die elektromagnetische Strahlung eine Frequenz ihres elektromagnetischen Wechselfeldes aufweist, die gleich einer Absorptionsfrequenz des Probengases ist. Dadurch absorbieren die in dem Gasgemisch enthaltenen Probengas-Moleküle die einfallende elektromagnetische Strahlung, wodurch es zu einer Erwärmung und somit zu einer thermischen Ausdehnung des gesamten Gasgemisches kommt.

Um aus der Bestrahlung des Gases Schlüsse auf die Konzentration des Probengases ziehen zu können, wird die einfallende elektromagnetische Strahlung derart moduliert, dass die thermische Ausdehnung des Gasgemisches periodisch auftritt und somit eine Schallwelle innerhalb des Gasgemisches entsteht. Durch eine Messung der Intensität dieser Schallwelle, beispielsweise mittels eines Mikrofons, kann auf die Konzentration des Probengases innerhalb des Gasgemisches rückgeschlossen werden. Das Gasgemisch befindet sich bei dem Durchführen eines solchen photoakustischen Verfahrens vorteilhafterweise in einer Resonatorzelle, die einen akustischen Resonator mit einer Resonanzfrequenz darstellt. Die Intensität der Schallwelle kann dann verstärkt werden, indem die Modulationsfrequenz der einfallenden elektromagnetischen Strahlung auf den Wert der Resonanzfrequenz gesetzt wird. Dies ermöglicht ein verbessertes Signal-Rausch-Verhältnis bei der Messung der Intensität der Schallwelle.

Wie eingangs beschrieben wird die zu absorbierende elektromagnetische Strahlung in der Regel derart moduliert, dass die Frequenz der Schallwelle gleich der Resonanzfrequenz des akustischen Resonators ist, um eine bestmögliche Verstärkung der Intensität der Schallwellen zu erreichen. Die Resonanzfrequenz ist allerdings keine unveränderliche Größe. Sie variiert insbesondere in Abhängigkeit von veränderlichen Umgebungsparametern wie Temperatur, Gaszusammensetzung und Druck. Daher ist es erforderlich, während des Durchführens eines photoakustischen Verfahrens die aktuelle tatsächliche Resonanzfrequenz des akustischen Resonators durchgehend zu kennen, um die einfallende elektromagnetische Strahlung entsprechend variieren zu können. Mit anderen Worten: die Resonanzfrequenz des akustischen Resonators muss beim Durchführen des Verfahrens nachgeführt werden, damit die gewünschte Verstärkung dauerhaft erfolgen kann.

Bisher kann eine solche Nachführung darüber erfolgen, dass durch Austesten unterschiedlicher Modulationsfrequenzen der einfallenden elektromagnetischen Strahlung, die von den Probengas-Molekülen absorbiert wird, festgestellt wird, bei welcher Frequenz die Resonanzfrequenz des akustischen Resonators liegt. Dies ist allerdings mit einem hohen zeitlichen Aufwand verbunden, wobei auch die eigentliche Messung zum Bestimmen der Probengas-Konzentration immer wieder unterbrochen werden muss. In den in der Praxis sehr häufigen Fällen einer sehr geringen Probengaskonzentration ist zudem das Signal-zu-Rausch Verhältnis bei der Bestimmung der Resonanzfrequenz aufgrund des Messprinzips des photoakustischen Verfahrens sehr klein.

Eine Nachführung kann auch darüber erfolgen, dass ein Lautsprecher innerhalb des akustischen Resonators eine Schallwelle erzeugt und durch die Modulation der Schallwelle die Resonanzfrequenz bestimmt wird. Diese Verwendung eines Lautsprechers ist allerdings mit einem hohen konstruktiven Aufwand verbunden.

Alternativ zum Nachführen der Resonanzfrequenz wurde bisher vorgeschlagen, die akustische Zelle temperaturstabilisiert zu konstruieren, da die Temperaturvariation einen prägenden Einfluss auf die Verstimmung der Resonanzfrequenz hat. Dies ist allerdings nur mit einer zusätzlichen, kostspieligen Konstruktion zu erreichen.

Aus der WO 2018/096091 A1 ist ein Messgerät zur Messung einer Messeigenschaft einer Messkomponente in einem Messgas und ein Verfahren zum Betreiben dieses Messgeräts bekannt. Das Messgas wird in einer Messkammer photoakustisch angeregt, der dabei erzeugte Schall wird mit einem Schallaufnehmer aufgenommen und das aufgenommene Signal wird in einer Auswerteeinheit zur Ermittlung der Messeigenschaft ausgewertet. Die Auswerteeinheit korrigiert die ermittelte Messeigenschaft mittels einer Korrekturfunktion. Zur Ermittlung zumindest eines Parameters der Korrekturfunktion wird zumindest einmal ein Ermittlungsdruck in der Messkammer eingestellt, dabei wird der Absolutdruck in der Messkammer ermittelt. Es wird bei diesem Absolutdruck zumindest eine Ermittlungsmessung bei einer Ermittlungsanregung durchgeführt und der zumindest eine Parameter wird anhand des Absolutdrucks und des Ermittlungsmessergebnisses der Ermittlungsmessung ermittelt.

Die CN 109 490 216 A offenbart ein kalibrierungsfreies Laser-Photoakustik-Spektroskopie-Spurengasnachweisgerät und -verfahren. Das Laser-Photoakustik-Spektroskopie-Spurengasnachweisgerät umfasst eine Laserlichtquelle, einen optischen Kollimator, eine photoakustische Zelle, eine photothermische Umwandlungskomponente, ein Mikrofon, ein Lufteinlassventil, ein Luftauslassventil, einen Beleuchtungstreiber, eine Signalerfassungs- und -verarbeitungsschaltung und einen PC. Die photothermische Umwandlungskomponente wird in der herkömmlichen photoakustischen Gasabsorptionszelle verstärkt, das erzeugte photoakustische Signal dient als Referenzsignal, die Gaskonzentration wird unter Verwendung einer Wellenlängenmodulationstechnik und ein 2f/1f-Detektionsverfahren gemessen, und eine kalibrierungsfreie Gaskonzentrationsmessung während der Leistungsänderung der Laserlichtquelle wird realisiert.

Vor diesem Hintergrund ist es Aufgabe der vorliegenden Erfindung, ein Verfahren sowie eine Vorrichtung bereitzustellen, mit denen die Resonanzfrequenz eines akustischen Resonators möglichst einfach bestimmt werden kann. Bei dem Durchführen eines photoakustischen Verfahrens wird somit ein einfaches Nachführen der Resonanzfrequenz des akustischen Resonators ermöglicht.

Diese Aufgabe wird mit einem Verfahren gemäß Anspruch 1 gelöst. Dieses Verfahren weist erfindungsgemäß folgende Schritte auf:
a) Gemäß einer ersten Alternative, Bereitstellen eines akustischen Resonators, wobei der akustische Resonator ein Absorptionselement mit einem Oberflächenabschnitt aufweist, Bereitstellen eines Probenfluides oder eines das Probenfluid aufweisenden Fluidgemisches, sodass der akustische Resonator mit dem Probenfluid oder dem das Probenfluid aufweisenden Fluidgemisch gefüllt ist,
   wobei der Oberflächenabschnitt des Absorptionselements in Kontakt mit dem Probenfluid oder dem das Probenfluid aufweisenden Fluidgemisch steht,
      oder
   gemäß einer zweiten Alternative, Bereitstellen eines akustischen Resonators, Bereitstellen eines ein Probenfluid aufweisenden Fluidgemisches, sodass der akustische Resonator mit dem Fluidgemisch gefüllt ist,
   wobei das Fluidgemisch zusätzlich zum Probenfluid zumindest ein Absorptionsfluid oder einen oder mehrere Absorptionspartikel aufweist,
b) Gemäß der ersten Alternative, Bestrahlen des Oberflächenabschnitts des Absorptionselements mit einer ersten elektromagnetischen Strahlung, sodass das Absorptionselement im Bereich des Oberflächenabschnitts die erste elektromagnetische Strahlung zumindest teilweise absorbiert,
   oder
   gemäß der zweiten Alternative, Bestrahlen des Fluidgemisches mit einer ersten elektromagnetischen Strahlung, sodass das Absorptionsfluid oder die Absorptionspartikel die erste elektromagnetische Strahlung zumindest teilweise absorbieren,
   so dass bei beiden Alternativen durch die Absorption Druckenergie in dem Probenfluid oder dem das Probenfluid aufweisenden Fluidgemisch erzeugt wird, wobei die erste elektromagnetische Strahlung mit einer Modulationsfrequenz amplituden- oder frequenzmoduliert ist,
c) Messen eines akustischen Antwortsignals des akustischen Resonators, das durch die in Schritt b) erfolgte Absorption der ersten elektromagnetischen Strahlung erzeugt wird,
d) Bestimmen zumindest einer Amplitude (A) oder Phase (ϕ) des akustischen Antwortsignals, das die Modulationsfrequenz der ersten elektromagnetischen Strahlung aufweist,
   Bestimmen einer Eigenschaft des akustischen Resonators, wobei einer der folgenden Schritte oder beide folgenden Schritte vorgesehen sind:
   e) Bestimmen einer Resonanzfrequenz des akustischen Resonators (5) aus zumindest der in Schritt d) bestimmten Amplitude (A) oder Phase (ϕ),
   f) Bestimmen einer Dämpfungseigenschaft des akustischen Resonators (5).

In einer Ausführungsform des erfindungsgemäßen Verfahrens ist das Probenfluid ein Probengas oder das Probenfluid aufweisende Fluidgemisch ist ein Probengas aufweisendes Gasgemisch.

Es ist festzuhalten, dass das erfindungsgemäße Verfahren im Allgemeinen zur Analyse von Fluiden, insbesondere aller Arten von Spurengasen in Gasgemischen, eingesetzt werden kann und insbesondere nicht auf den Einsatz bei Schadstoffen begrenzt ist. In einer besonderen Ausführungsform wird das Verfahren hingegen gezielt zum Nachweis von Schadstoffen verwendet.

Unter einem akustischen Antwortsignal des akustischen Resonators wird eine Druckvariation innerhalb des akustischen Resonators verstanden, die durch die Absorption der ersten elektromagnetischen Strahlung hervorgerufen wird. Diese Druckvariation wird physikalisch als Schallwelle oder Schallimpuls beschrieben. Messtechnisch betrachtet ist das akustische Antwortsignal zum Beispiel eine von einem einzelnen lokalen akustischen Sensor aufgezeichnete Zeitreihe des Drucks.

Unter einem Absorptionselement des akustischen Resonators im Sinne der ersten Alternative ist ein Element des akustischen Resonators zu verstehen, dass in der Lage ist, die erste elektromagnetische Strahlung zumindest teilweise zu absorbieren. Ein Absorptionselement kann entweder ein zusätzliches konstruktives Element sein oder ein dem akustischen Resonator innewohnendes Element wie eine Seitenwand oder der Resonatorboden. In einer Ausführungsform des erfindungsgemäßen Verfahrens ist eine erste Seitenwand des akustischen Resonators oder ein Teilstück der ersten Seitenwand des akustischen Resonators das Absorptionselement.

Das erfindungsgemäße Verfahren ermöglicht das Bestimmen einer Resonanzfrequenz des akustischen Resonators und liefert somit u.a. die Grundlage für ein photoakustisches Verfahren bei dem die Resonanzfrequenz effizient nachgeführt werden kann.

Darüber hinaus ermöglicht das erfindungsgemäße Verfahren das Bestimmen einer Eigenschaft des im akustischen Resonator befindlichen Fluides oder Fluidgemisches wie der Schallgeschwindigkeit dieses Fluides oder Fluidgemisches.

In einer besonderen Ausführungsform der vorliegenden Erfindung befindet sich Umgebungsluft oder ein dazu vergleichbares Gasgemisch im akustischen Resonator. In dieser Ausführungsform wird die Schallgeschwindigkeit mit dem oben beschriebenen erfindungsgemäßen Verfahren ermittelt. Zusätzlich werden die Temperatur und der Feuchtegehalt der Umgebungsluft oder des vergleichbaren Gasgemisches bestimmt. Aus den so bestimmten Parametern Schallgeschwindigkeit, Temperatur und Feuchtegehalt wird bei dieser Ausführungsform die Konzentration von Kohlenstoffdioxid in der Umgebungsluft oder dem dazu vergleichbaren Gasgemisch bestimmt.

In einer Ausführungsform des erfindungsgemäßen Verfahrens wird der Schritt b) mindestens zweimal durchgeführt, wobei die erste elektromagnetische Strahlung bei einem ersten Durchführen von Schritt b) mit einer ersten Modulationsfrequenz moduliert wird und bei einem zweiten Durchführen von Schritt b) mit einer zweiten Modulationsfrequenz moduliert wird, wobei sich die zweite Modulationsfrequenz von der ersten Modulationsfrequenz unterscheidet, sodass in Schritt d) mindestens eine erste Amplitude oder Phase (ϕ1) für die erste Modulationsfrequenz, und eine zweite Amplitude oder Phase (ϕ2) für die zweite Modulationsfrequenz, bestimmt werden.

Gemäß dieser Ausführungsform der Erfindung erfolgt ein Durchstimmen der Modulationsfrequenz der ersten elektromagnetischen Strahlung, vorzugsweise innerhalb eines zuvor abgegrenzten Frequenzbereichs. Dies kann vorteilhaft dazu benutzt werden, die Resonanzfrequenz des akustischen Resonators zu suchen und zu bestimmen. Der Frequenzbereich, in dem ein solches Durchstimmen der Modulationsfrequenz vorzugweise erfolgt, richtet sich in einer Ausführungsform nach einem Erwartungswert für die Resonanzfrequenz. Dieser Erwartungswert richtet sich wiederum nach der geometrischen Form des akustischen Resonators, durch welche die Resonanzfrequenz maßgeblich vorgegeben ist, und optional nach parallel gemessenen Umgebungsparametern wie der Umgebungstemperatur oder dem Feuchtegehalt eines im akustischen Resonator befindlichen Gases oder Gasgemisches.

In einer Ausführungsform des erfindungsgemäßen Verfahrens ist folgender weiterer Schritt vorgesehen:
g) Bestimmen eines von der Modulationsfrequenz abhängigen Amplitudenganges oder Phasenganges aus den zumindest zwei in Schritt d) bestimmten Amplituden oder Phasen des akustischen Antwortsignals.

Bei einem von der Modulationsfrequenz abhängigen Amplitudengang oder Phasengang handelt es sich im mathematischen Sinne um eine zweidimensionale Matrix, bei der Amplitudenwerte oder Phasenwerte eine Zuordnung gegenüber Modulationsfrequenzen erfahren. Auf der Basis einer solchen Matrix lässt sich grafisch auch eine Zuordnung von Amplituden oder Phasenwerten gegenüber Modulationsfrequenzen der ersten elektromagnetischen Strahlung in Form eines Graphen angeben. Der Verlauf dieses Graphen wird als Amplitudengang oder Phasengang bezeichnet. Im Sinne der vorliegenden Erfindung sind aber auch die einem solchen Graphen zugrundeliegende Matrix als Amplitudengang oder Phasengang zu verstehen.

Aus einem im Sinne dieser Ausführungsform der Erfindung bestimmten Amplitudengang oder Phasengang lässt sich besonders einfach die Resonanzfrequenz des akustischen Resonators bestimmen, indem das Maximum des Amplituden- oder Phasengangs bestimmt wird, wobei die Modulationsfrequenz, die diesem Maximum zugeordnet ist, dann die gesuchte Resonanzfrequenz darstellt.

In einer Ausführungsform des erfindungsgemäßen Verfahrens ist in Schritt b) die erste elektromagnetische Strahlung derart amplituden- oder frequenzmoduliert, dass ein breitbandiges akustisches Antwortsignal des akustischen Resonators erzeugt wird, wobei folgender weiterer Schritt vorgesehen ist:
h) Bestimmen eines von der Modulationsfrequenz abhängigen Amplitudenganges oder Phasenganges aus dem in Schritt c) gemessenen breitbandigen akustischen Antwortsignal, vorzugsweise durch Anwenden einer Frequenzanalyse und besonders bevorzugt durch Anwenden einer Fourier-Transformation auf das in Schritt c) gemessene breitbandige akustische Antwortsignal.

Dieser Verfahrensschritt kann zusätzlich oder alternativ zu einem Durchstimmen der Modulationsfrequenz der ersten elektronischen Strahlung verwendet werden, um den Amplitudengang oder Phasengang zu bestimmen. Ein Vorteil dieser Ausführungsform besteht darin, dass durch das Anregen eines breitbandigen akustischen Antwortsignals ein besonders schnelles Bestimmen des Amplitudengangs oder Phasengangs und somit auch ein besonders schnelles Bestimmen der Resonanzfrequenz des akustischen Resonators ermöglicht werden.

In einer Ausführungsform des erfindungsgemäßen Verfahrens ist die erste elektromagnetische Strahlung mit einem Rechtecksignal amplitudenmoduliert. Aufgrund der steilen Flanke des Rechtecksignals und der darin enthaltenen Vielzahl von Modulationsfrequenzen führt eine solche Modulation auf vorteilhafter Weise zu einer Anregung eines breitbandigen akustischen Antwortsignals, sodass in Verbindung mit einer Frequenzanalyse ein effizientes Bestimmen des Amplitudengangs oder Phasengangs erfolgen kann.

Die Frequenzanalyse wird besonders bevorzugt durch das Anwenden einer schnellen Fourier-Transformation (engl. fast fourier transformation, kurz: FFT) durchgeführt.

In einer Ausführungsform des erfindungsgemäßen Verfahrens weist die erste elektromagnetische Strahlung eine Frequenz des elektromagnetischen Wechselfeldes auf, die ungleich einer Absorptionsfrequenz des Probenfluides ist, wobei die erste elektromagnetische Strahlung vorzugsweise eine Wellenlänge oder einen Wellenlängenbereich aufweist, die oder der zwischen 380 nm und 1200 nm liegt.

Erfindungsgemäß wird in einem weiteren Schritt eine Eigenschaft des akustischen Resonators bestimmt, wobei insbesondere einer der folgenden Schritte oder beide folgenden Schritte vorgesehen sein können:
e) Bestimmen einer Resonanzfrequenz des akustischen Resonators aus zumindest einer in Schritt d) bestimmten Amplitude oder Phase,
f) Bestimmen einer Dämpfungseigenschaft des akustischen Resonators.

Das erfindungsgemäße Verfahren wird im Sinne dieser Ausführungsform vorteilhaft dazu verwendet, eine Eigenschaft des akustischen Resonators zu bestimmen, um ein anderes, mit dem akustischen Resonator durchzuführendes Verfahren zu optimieren. Eine Dämpfungseigenschaft des akustischen Resonators kann dabei der Dämpfungskoeffizient des akustischen Resonators oder der Dämpfungskoeffizient eines Teilbereichs des akustischen Resonators, beispielsweise eines Wandbereiches des akustischen Resonators, sein.

Das erfindungsgemäße Verfahren kann ein Verfahren zum Bestimmen einer Eigenschaft des akustischen Resonators darstellen.

In einer Ausführungsform des erfindungsgemäßen Verfahrens wird in einem weiteren Schritt eine Eigenschaft des im akustischen Resonator befindlichen Fluides oder Fluidgemisches bestimmt, wobei insbesondere einer der folgenden Schritte oder beide folgenden Schritte vorgesehen sein können:
i) Bestimmen einer Schallgeschwindigkeit des im akustischen Resonator befindlichen Fluides oder Fluidgemisches oder
j) Bestimmen einer Dichte des im akustischen Resonator befindlichen Fluides oder Fluidgemisches oder einer Konzentration des Probenfluides, falls das Probenfluid ein Bestandteil eines im akustischen Resonator befindlichen Fluidgemisches ist.

Die Schritte i) und j) können auch derart verschränkt vorgesehen sein, dass zunächst gemäß Schritt i) eine Schallgeschwindigkeit bestimmt wird und aus der Schallgeschwindigkeit gemäß Schritt j) eine Dichte oder Konzentration bestimmt wird.

Das erfindungsgemäße Verfahren ist in einer Ausführungsform ein Verfahren zum Bestimmen einer Eigenschaft des im akustischen Resonator befindlichen Fluides oder Fluidgemisches.

In einer Ausführungsform des erfindungsgemäßen Verfahrens stellt dieses ein photoakustisches Verfahren zum Bestimmen einer Eigenschaft eines Probengases mit den folgenden Schritten dar:
aa) Bestimmen einer Resonanzfrequenz des akustischen Resonators mit einer Ausführungsform des zuvor beschriebenen Verfahrens,
bb) Bestrahlen des Probengases oder des das Probengas aufweisenden Gasgemisches mit einer zweiten elektromagnetischen Strahlung, wobei die zweite elektromagnetische Strahlung zumindest eine Frequenz ihres elektromagnetischen Wechselfeldes aufweist, die gleich einer Absorptionsfrequenz des Probengases ist, und wobei die zweite elektromagnetische Strahlung mit einer Modulationsfrequenz amplituden- oder frequenzmoduliert ist, wobei die Modulationsfrequenz im Wesentlichen gleich der in Schritt aa) bestimmten Resonanzfrequenz des akustischen Resonators ist,
cc) Messen eines akustischen Antwortsignals des akustischen Resonators, das durch eine in Schritt bb) erfolgte Absorption der zweiten elektromagnetischen Strahlung durch das Probengas erzeugt wird,
dd) Bestimmen der Eigenschaft des Probengases aus dem akustischen Antwortsignal des akustischen Resonators.

Diese Ausführungsform des erfindungsgemäßen Verfahrens ermöglicht es dem Nutzer bei dem Durchführen eines photoakustischen Verfahrens, die Resonanzfrequenz des akustischen Resonators auf vorteilhafte Weise zu bestimmen, nämlich ohne dass die zweite elektromagnetische Strahlung, die für die Erwärmung des Probengases und somit für das Bestimmen einer Eigenschaft des Probengases verwendet wird, selbst auch zum Bestimmen der Resonanzfrequenz verwendet werden muss. Dies erleichtert ein Nachführen der Resonanzfrequenz. Das photoakustische Verfahren wird somit effizienter und gleichzeitig robuster gegenüber variierenden Umgehungsparametern wie Temperatur, Gaszusammensetzung oder Druck.

Bei Schritt aa) des photoakustischen Verfahrens wird bevorzugt die erste Alternative des Verfahrens nach Anspruch 1 oder die zweite Alternative des Verfahrens nach Anspruch 1 mit einem zusätzlichen Absorptionsgas nicht aber die zweite Alternative des Verfahrens nach Anspruch 1 mit Absorptionspartikeln verwendet, da im Gasgemisch vorhandene Absorptionspartikel auch die zweite elektromagnetische Strahlung zumindest teilweise absorbieren und dies zu einem schlechteren signal-to-offset-Verhältnis bei photoakustischen Verfahren führt.

Das in Schritt cc) zu messende akustische Antwortsignal und das in Schritt aa) zu messende akustische Antwortsignal sind in einer Ausführungsform zwei zeitlich nacheinander messbare akustische Antwortsignale. In dieser Ausführungsform erfolgen das Bestrahlen mit der ersten elektromagnetischen Strahlung und das Bestrahlen mit der zweiten elektromagnetischen Strahlung zu unterschiedlichen Zeiten.

In einer alternativen Ausführungsform sind das in Schritt cc) zu messende akustische Antwortsignal und das in Schritt aa) zu messende akustische Antwortsignal zwei zeitlich überlagerte akustische Antwortsignale, die zusammen in einem gemeinsamen Schritt gemessen werden. In dieser Ausführungsform erfolgen das Bestrahlen mit der ersten elektromagnetischen Strahlung und das Bestrahlen mit der zweiten elektromagnetischen Strahlung zumindest zeitweise gleichzeitig, wobei sich die Modulationsfrequenz der ersten elektromagnetischen Strahlung von der Modulationsfrequenz der zweiten elektromagnetischen Strahlung unterscheidet. In diesem Fall wird das in einem gemeinsamen Schritt gemessene akustische Signal nachträglich separiert, um das akustische Antwortsignal, das durch eine in Schritt bb) erfolgte Absorption der zweiten elektromagnetischen Strahlung durch das Probengas erzeugt wird, von dem akustischen Antwortsignal zu trennen, das durch die in Schritt b) erfolgte Absorption der ersten elektromagnetischen Strahlung erzeugt wird.

In einer Ausführungsform des erfindungsgemäßen Verfahrens ist die Eigenschaft des Probengases die Dichte oder Konzentration des Probengases. Diese Eigenschaft ist oftmals von besonderer Relevanz, insbesondere bei Anwendungen im Bereich des Umweltschutzes.

In einer Ausführungsform des erfindungsgemäßen Verfahrens wird die Eigenschaft des Probengases mehrfach über eine Verfahrensdauer hinweg zumindest mit den Schritten bb), cc) und dd) bestimmt, wobei während der Verfahrensdauer mehrfach, vorzugsweise periodisch und besonders bevorzugt vor jedem Durchführen des Schritts bb) die Resonanzfrequenz des akustischen Resonators mittels Schritt aa) bestimmt wird, sodass bei einem Durchführen von Schritt bb) die Modulationsfrequenz der zweiten elektromagnetischen Strahlung stets gleich der aktuell bestimmten Resonanzfrequenz ist.

Hierdurch wird auf vorteilhafte Weise sichergestellt, dass ein regelmäßiges Anpassen der Modulationsfrequenz an die variierende Resonanzfrequenz des akustischen Resonators erfolgt, sodass das Signal-Rausch-Verhältnis des akustischen Antwortsignals des akustischen Resonators über die gesamte Verfahrensdauer hinweg optimiert, das heißt im Wesentlichen maximal ist.

In einer Ausführungsform des erfindungsgemäßen Verfahrens weist die zweite elektromagnetische Strahlung eine Wellenlänge oder einen Wellenlängenbereich auf, die oder der zwischen 780 nm und 1 mm liegt.

In einer Ausführungsform des erfindungsgemäßen Verfahrens wird die zweite elektromagnetische Strahlung derart geführt, dass sie nicht von einer Oberfläche des akustischen Resonators absorbiert wird. Dies stellt sicher, dass es zu keiner weiteren Absorption von Teilen des akustischen Resonators kommt außer der gewollten Absorption der ersten elektromagnetischen Strahlung zum Bestimmen der Resonanzfrequenz. Das Bestimmen der Resonanzfrequenz mittels der ersten elektromagnetischen Strahlung wird somit zum einen nicht durch die zweite elektromagnetische Strahlung gestört. Außerdem wird auch das Messen des akustischen Antwortsignals, das sich aus dem Bestrahlen mit der zweiten elektromagnetischen Strahlung ergibt, nicht durch eine unerwünschte Wandabsorption gestört.

Die der Erfindung zugrunde liegende Aufgabe wird auch durch eine Vorrichtung zum Durchführen des erfindungsgemäßen Verfahrens gemäß einer der zuvor beschriebenen Ausführungsformen gelöst. Dabei handelt es sich um eine Vorrichtung mit zumindest einer Strahlungsquelle zum Erzeugen einer ersten elektromagnetischen Strahlung, einem akustischen Resonator, der ein Absorptionselement mit einem Oberflächenabschnitt aufweist, wobei der Oberflächenabschnitt des Absorptionselements derart angeordnet ist, dass der Oberflächenabschnitt in Kontakt mit einem Probenfluid oder einem das Probenfluid aufweisenden Fluidgemisch steht, wenn der akustische Resonator mit dem Probenfluid oder dem das Probenfluid aufweisenden Fluidgemisch befüllt ist, wobei das Absorptionselement derart ausgebildet ist, dass es im Bereich des Oberflächenabschnitts die erste elektromagnetische Strahlung zumindest teilweise absorbiert, sodass Druckenergie in dem Probenfluid oder dem das Probenfluid aufweisenden Fluidgemisch erzeugt wird, wenn der akustische Resonator mit dem Probenfluid oder dem das Probenfluid aufweisenden Fluidgemisch befüllt ist, einem Schallsensor zum Messen eines akustischen Antwortsignals des Resonators, wobei die zumindest eine Strahlungsquelle und der akustische Resonator derart ausgebildet und angeordnet sind, dass die erste elektromagnetische Strahlung auf den Oberflächenabschnitt des Absorptionselements trifft, wobei die Vorrichtung derart eingerichtet ist, dass zumindest einer Amplitude oder Phase des akustischen Antwortsignals bestimmt wird und eine Eigenschaft des akustischen Resonators bestimmt wird, wobei einer der folgenden Schritte oder beide folgenden Schritte vorgesehen sind: Bestimmen einer Resonanzfrequenz des akustischen Resonators aus zumindest der Amplitude oder Phase, Bestimmen einer Dämpfungseigenschaft des akustischen Resonators.

Soweit hier Aspekte der Erfindung im Hinblick auf die Vorrichtung beschrieben werden, so gelten diese auch für das entsprechende Verfahren und umgekehrt. Soweit das Verfahren mit einer Vorrichtung gemäß dieser Erfindung ausgeführt wird, so weist diese die entsprechenden Einrichtungen hierfür auf. Insbesondere sind Ausführungsformen der Vorrichtung zum Ausführen der zuvor beschriebenen Ausführungsformen des Verfahrens geeignet.

In einer Ausführungsform der erfindungsgemäßen Vorrichtung ist eine Strahlungsquelle zum Erzeugen einer zweiten elektromagnetischen Strahlung vorgesehen, wobei der akustische Resonator eine erste Öffnung oder ein erstes Fenster, das zumindest für die zweite elektromagnetische Strahlung zumindest teilweise transparent ist, aufweist, wobei der akustische Resonator und die Strahlungsquelle der zweiten elektromagnetischen Strahlung derart ausgebildeten angeordnet sind, dass die zweite elektromagnetische Strahlung durch die erste Öffnung oder das erste Fenster in den akustischen Resonator gelangt.

Diese Ausführungsform der erfindungsgemäßen Vorrichtung ermöglicht insbesondere ein vorteilbehaftetes Durchführen eines erfindungsgemäßen photoakustischen Verfahrens mit einer ersten und einer zweiten elektromagnetischen Strahlung.

Die Strahlungsquelle zum Erzeugen einer ersten elektromagnetischen Strahlung und die zum Erzeugen einer zweiten elektromagnetischen Strahlung können im Sinne dieser Ausführungsform separate Strahlungsquellen oder eine einzige Strahlungsquelle sein.

Im Falle einer einzigen Strahlungsquelle ist vorzugsweise zumindest ein zusätzliches optisches Element vorgesehen, das derart ausgebildet ist, dass sich die von der einzelnen Strahlungsquelle emittierte elektromagnetische Strahlung in eine erste und eine zweite elektromagnetische Strahlung aufteilt und sich die Wellenlänge der ersten elektromagnetischen Strahlung und die Wellenlänge der zweiten elektromagnetischen Strahlung unterscheiden. Alternativ ist eine einzige Strahlungsquelle zum Erzeugen einer elektromagnetischen Strahlung vorgesehen, die derart ausgebildet und angeordnet ist, dass der Strahlengang der Strahlung veränderbar ist und in einer ersten Einstellung des Strahlengangs die erzeugte elektromagnetische Strahlung die erste elektromagnetische Strahlung ist und in einer zweiten Einstellung des Strahlengangs die erzeugte elektromagnetische Strahlung die zweite elektromagnetische Strahlung ist. Bei dieser Alternative erfolgen das Bestrahlen mit der ersten und das Bestrahlen mit der zweiten elektromagnetischen Strahlung nicht zeitgleich sondern zeitlich hintereinander.

In einer Ausführungsform der erfindungsgemäßen Vorrichtung weist der akustische Resonator eine zweite Öffnung oder ein zweites Fenster auf, welches zumindest für die zweite, elektromagnetische Strahlung zumindest teilweise transparent ist, wobei der akustische Resonator und die Strahlungsquelle der zweiten elektromagnetischen Strahlung derart ausgebildet und angeordnet sind, dass die zweite elektromagnetische Strahlung durch die zweite Öffnung oder das zweite Fenster aus dem akustischen Resonator heraus gelangt.

In einer Ausführungsform der erfindungsgemäßen Vorrichtung ist der akustische Resonator derart ausgebildet, dass sich durch ein Bestrahlen des Oberflächenabschnitts mit der ersten elektromagnetischen Strahlung im Falle eines mit dem Probenfluid gefüllten akustischen Resonators innerhalb des Resonators eine stehende Schallwelle mit zumindest einem Druckmaximum ausbildet, wobei der akustische Resonator und die Strahlungsquelle der ersten elektromagnetischen Strahlung derart ausgebildet und angeordnet sind, dass der von der ersten elektromagnetischen Strahlung bestrahlte Oberflächenabschnitt an einer Stelle angeordnet ist, die im Wesentlichen gleich der Stelle des Druckmaximums der stehenden Welle ist.

Die thermische Anregung des Oberflächenabschnitts mittels der ersten elektromagnetischen Strahlung im Bereich des Druckmaximums ist besonders vorteilhaft, da das signal-to-offset-Verhältnis des akustischen Antwortsignals, welches sich aus dieser Anregung ergibt, maximal ist.

In einer Ausführungsform der erfindungsgemäßen Vorrichtung sind eine erste Strahlungsquelle zum Erzeugen der ersten elektromagnetischen Strahlung und eine separate zweite Strahlungsquelle zum Erzeugen der zweiten elektromagnetischen Strahlung vorgesehen, wobei vorzugsweise die erste Strahlungsquelle eine Leuchtdiode (LED) im sichtbaren Spektralbereich und die zweite Strahlungsquelle eine LED im infraroten Spektralbereich ist.

In einer Ausführungsform der erfindungsgemäßen Vorrichtung ist die Strahlungsquelle der ersten elektromagnetischen Strahlung derart ausgebildet und angeordnet, dass die erste elektromagnetische Strahlung durch eine Öffnung oder ein Fenster in den akustischen Resonator gelangt, wobei im Falle eines Fensters das Fenster sowohl für die erste als auch für die zweite elektronmagnetische Strahlung zumindest teilweise transparent ist, oder alternativ die Strahlungsquelle der ersten elektromagnetischen Strahlung derart ausgebildet und angeordnet ist, dass die erste elektromagnetische Strahlung innerhalb des akustischen Resonators erzeugt wird.

Zudem betrifft die vorliegende Erfindung eine Verwendung der erfindungsgemäßen Vorrichtung zur Abgasmessung in einem Kraftfahrzeug, zur Schadstoffmessung in der Umgebungsluft oder zur Messung der Wasserstoffkonzentration in einem Gasgemisch.

Weitere Vorteile, Merkmale und Ausführungsformen der vorliegenden Erfindung sind den nachfolgenden Figuren und der dazugehörigen Beschreibung zu entnehmen. Es zeigen:
- Figur 1:: eine schematische Seitenansicht einer ersten Ausführungsform der erfindungsgemäßen Vorrichtung, mit der eine erste Ausführungsform des erfindungsgemäßen Verfahrens durchgeführt werden kann,
- Figur 2:: eine schematische Seitenansicht einer zweiten Ausführungsform der erfindungsgemäßen Vorrichtung, mit der eine zweite Ausführungsform des erfindungsgemäßen Verfahrens durchgeführt werden kann,
- Figur 3:: eine schematische Seitenansicht einer dritten Ausführungsform der erfindungsgemäßen Vorrichtung, mit der eine dritte Ausführungsform des erfindungsgemäßen Verfahrens durchgeführt werden kann,
- Figur 4:: eine schematische Seitenansicht einer vierten Ausführungsform einer erfindungsgemäßen Vorrichtung, mit der eine vierte Ausführungsform des erfindungsgemäßen Verfahrens durchgeführt werden kann.

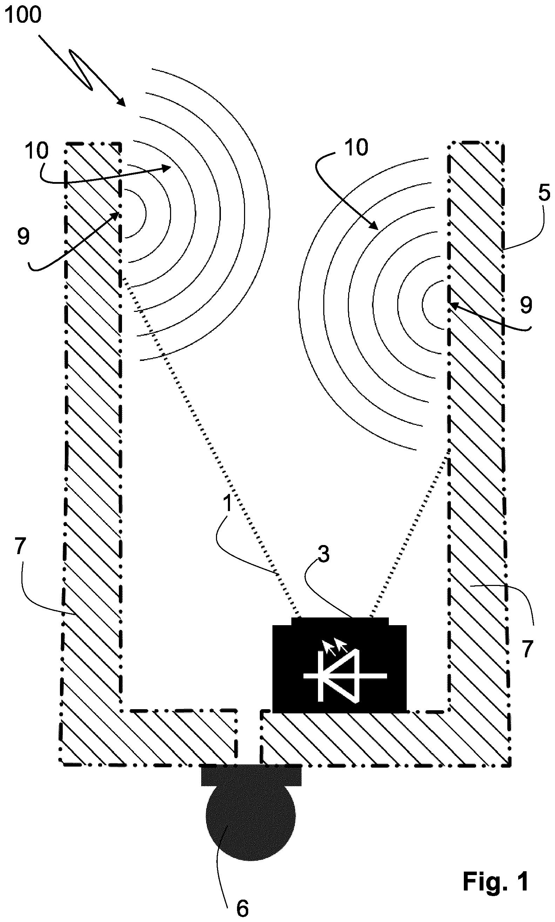

Bei der in Figur 1 dargestellten ersten Ausführungsform der erfindungsgemäßen Vorrichtung 100 handelt es sich um eine spezielle Vorrichtung, die nur so viele Elemente aufweist, wie dies zur Verwirklichung des zugrundeliegenden Erfindungsgedankens notwendig ist. Es ist eine einzige Strahlungsquelle 3 vorgesehen, die eine erste elektromagnetische Strahlung 1 erzeugt. Der Strahlengang der ersten elektromagnetischen Strahlung ist dabei divergent. Die Strahlungsquelle 3 ist derart angeordnet, dass die erste elektromagnetische Strahlung 1 innerhalb einer nach oben hin offenen Resonatorzelle 5, die auch als akustischer Resonator bezeichnet wird, erzeugt wird und auf einen Oberflächenabschnitt 9 der Oberfläche einer Resonatorzellenwand 7 trifft. Die nach oben offene Resonatorzelle 5 stellt dabei einen Resonator für Longitudinalwellen dar.

Im Zuge des Durchführens einer ersten Ausführungsform des erfindungsgemäßen Verfahrens mit der in Figur 1 gezeigten ersten Ausführungsform der erfindungsgemäßen Vorrichtung wird die erste elektromagnetischen Strahlung von der Resonatorzellenwand 7, die im Sinne der vorliegenden Erfindung ein Absorptionselement darstellt, ganz oder teilweise absorbiert. Dadurch kommt es zu einer lokalen Erwärmung der Resonatorzellenwand 7 im Bereich des Oberflächenabschnitts 9. Wenn die von dem akustischen Resonator eingeschlossene Kavität mit einem ein Probenfluid aufweisenden Fluidgemisch, beispielsweise mit einem Probengasgemisch in Form von Wasserdampf (Probengas) aufweisender Umgebungsluft befüllt ist, kommt es durch Wärmetransport auch zu einer lokalen Erwärmung des Probengasgemisches im Bereich des Oberflächenabschnitts 9, da sich die Resonatorzellenwand 7 in Kontakt mit dem Probengasgemisch befindet. Mit der Erwärmung des Probengasgemisches geht sodann eine Erhöhung der Druckenergie innerhalb des Probengasgemisches einher.

Insgesamt betrachtet wird folglich zumindest ein Teil der Strahlungsenergie der ersten elektromagnetischen Strahlung zunächst in Wärmeenergie der Resonatorzellenwand 7 und dann in Druckenergie des Probengasgemisches umgewandelt.

Im Zuge des Durchführens der ersten Ausführungsform des erfindungsgemäßen Verfahrens wird die in Figur 1 dargestellte erste elektromagnetische Strahlung 1 amplituden- oder frequenzmoduliert. Vorzugsweise findet eine Amplitudenmodulation statt. Durch die Modulation der ersten elektromagnetischen Strahlung mit einer Modulationsfrequenz wird eine periodische Variation des Energieübertrags mit der entsprechenden Modulationsfrequenz bewirkt. Folglich wird mit der Modulationsfrequenz periodisch Druckenergie innerhalb des Probengases erzeugt. Dies führt entsprechend der hydrodynamischen Gesetzmäßigkeiten zur Ausbildung einer Druckwelle 10 (Schallwelle) im Probengas innerhalb des akustischen Resonators 5. Die Druckwelle 10 bildet sich im akustischen Resonator als stehende Welle aus, die in Abhängigkeit von der Nähe der anregenden Frequenz zur tatsächlichen Resonanzfrequenz weniger stark oder stärker resonant überhöht wird.

Die durch eine solche Schallwelle 10 erzeugte Druckvariation in Form einer stehenden Welle innerhalb des akustischen Resonators 5 wird mittels eines Mikrofons 6, das an der Unterseite des akustischen Resonators 5 angeordnet ist, gemessen. Im Sinne der vorliegenden Anmeldung wird das dabei gemessene Signal als ein akustisches Antwortsignal 10 des akustischen Resonators beschrieben, das durch eine Absorption der ersten elektromagnetischen Strahlung erzeugt wird. In diesem Sinne ist auch eine vom Mikrofon gemessene resonante Überhöhung der stehenden Schallwelle als akustisches Antwortsignal zu verstehen. Von dem Antwortsignal wird in einem weiteren Schritt die Amplitude oder Phase bestimmt.

Die Begriffe "Schallwelle" und "akustisches Antwortsignal" werden im Sinne der vorliegenden Erfindung synonym verwendet. Der Begriff "Schallwelle" ist im engeren Sinne die physikalische Beschreibung der im akustischen Resonator 5 stattfindenden Druckvariation und der Begriff "akustisches Antwortsignal" ist im engeren Sinne die messtechnische Beschreibung der im akustischen Resonator 5 erfolgenden Druckänderung oder resonanten Überhöhung.

Die Modulationsfrequenz der ersten elektromagnetischen Strahlung wird in der Folge variiert, sodass für jede Modulationsfrequenz eine Amplitude oder Phase des Antwortsignals bestimmt wird. Aus der Mehrzahl der Amplituden oder Phasen ergibt sich dann ein Amplitudengang oder Phasengang.

Aus dem so bestimmten Amplitudengang oder Phasengang können unmittelbar oder nach vorgelagertem Bestimmen der Resonanzfrequenz des akustischen Resonators Rückschlüsse auf die Eigenschaft des sich in dem akustischen Resonator 5 befindlichen Fluides oder Fluidgemisches wie Schallgeschwindigkeit, Dichte oder Konzentration gezogen werden. Insbesondere, wenn es sich bei dem in dem akustischen Resonator 5 befindlichen Fluid um gasförmiges Wasser/Wasserdampf (H₂O) handelt, können Rückschlüsse auf die Schallgeschwindigkeit innerhalb des Wasserdampfes und somit auch auf die Dichte des Wasserdampfes gezogen werden.

Die in Figur 1 gezeigte Anordnung kann parallel oder auch gesondert dazu genutzt werden, die Resonanzfrequenz oder andere Eigenschaften des akustischen Resonators 5 zu bestimmen.

Zum Bestimmen der Resonanzfrequenz wird die Modulationsfrequenz der ersten elektromagnetischen Strahlung 1 ebenfalls variiert, beispielsweise innerhalb eines Frequenzintervalls, in der die Resonanzfrequenz aufgrund des geometrischen Maßes der Resonatorzelle 5 erwartet wird. Mit anderen Worten wird die Modulationsfrequenz der ersten elektromagnetischen Strahlung 1 durchgestimmt und mit der Messung des akustischen Antwortsignals der Amplituden-oder Phasengang des akustischen Resonators bestimmt. Aus dem Amplitudengang wird dann ermittelt, für welche Modulationsfrequenz die Amplitude des akustischen Antwortsignals ein Maximum aufweist. Die so bestimmte Modulationsfrequenz entspricht der Resonanzfrequenz des akustischen Resonators.

Darüber hinaus kann anhand des ermittelten Amplituden-oder Phasenganges des akustischen Antwortsignals auch auf Dämpfungseigenschaften des akustischen Resonators zurückgeschlossen werden.

Beispielsweise kann der Dämpfungskoeffizient bzw. Teile des Dämpfungskoeffizient-Tensors des akustischen Resonators aus dem Amplituden-oder Phasengang bestimmt werden. Die Kenntnis des Dämpfungskoeffizienten bzw. Teile des Dämpfungskoeffizient-Tensors des akustischen Resonators erlaubt wiederum Rückschlüsse auf die Konzentration eine Probengaskonzentration innerhalb des akustischen Resonators.

Alternativ oder zusätzlich zum Durchstimmen der Modulationsfrequenz der ersten elektromagnetischen Strahlung 1 kann auch eine breitbandige Anregung einer Schallwelle 10 innerhalb des akustischen Resonators 5 erfolgen. Dazu wird die erste elektromagnetische Strahlung 1 beispielsweise mit einer Rechteckfunktion moduliert. Eine Rechteckfunktion enthält eine Vielzahl von Modulationsfrequenzen. Dementsprechend wird auch eine spektral breitbandige Schallwelle 10 durch die Absorption der ersten elektromagnetischen Strahlung 1 generiert. Das mittels des akustischen Mikrofons 6 gemessene akustische Antwortsignal enthält ebenfalls eine Vielzahl von Frequenzen. Mittels einer Frequenzanalyse, bei der es sich in der Regel um eine schnelle Fourier-Transformation (Fast-Fourier-Transformation, FFT) handelt, kann somit aus dem gemessenen akustischen Antwortsignal unmittelbar ein Amplituden- oder Phasengang berechnet werden. Anhand des Amplitudenganges lässt sich wiederum durch Auffinden eines Maximums die Resonanzfrequenz des akustischen Resonators bestimmen.

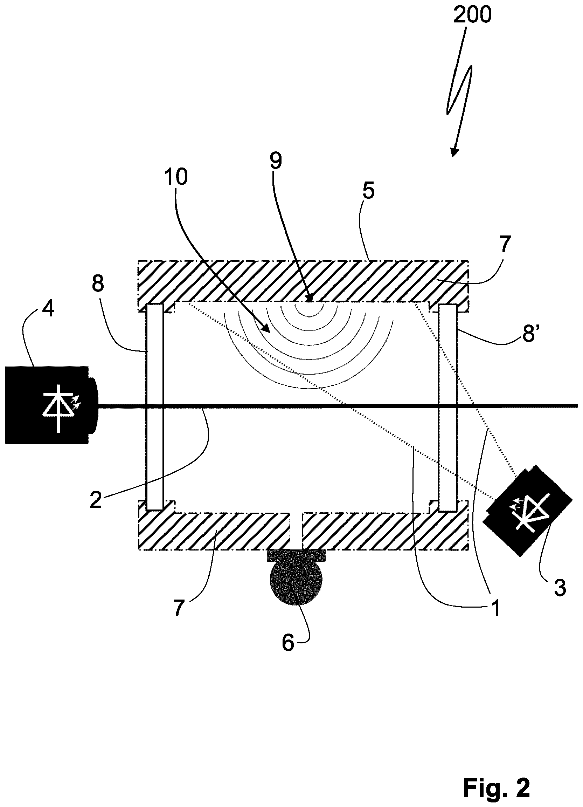

Figur 2 zeigt eine zweite Ausführungsform der erfindungsgemäßen Vorrichtung 200. Hierbei sind zwei separate Strahlungsquellen 3 und 4 vorgesehen. Die erste Strahlungsquelle 3 erzeugt die erste elektromagnetische Strahlung 1 und die zweite Strahlungsquelle 4 erzeugt die zweite elektromagnetische Strahlung 2. Die zweite Strahlungsquelle 4 erzeugt bei dieser Ausführungsform einen parallelen Strahlengang.

Beispielsweise kann die zweite Strahlungsquelle 4 ein Infrarot-LASER sein.

Die in Figur 2 gezeigte erfindungsgemäße Vorrichtung 200 ist insbesondere dazu vorgesehen, ein erfindungsgemäßes photoakustisches Verfahren durchzuführen, bei dem mittels der zweiten elektromagnetischen Strahlung 2 die Eigenschaft eines im akustischen Resonator 5 enthaltenen Probenfluides bestimmt wird. Dabei wird die zweite elektromagnetische Strahlung 2 vorteilhafterweise mit der Resonanzfrequenz des akustischen Resonators 5 amplituden-oder frequenzmoduliert. Zur Nachführung dieser Resonanzfrequenz wird die erste elektromagnetische Strahlung 1 verwendet, die auf eine Resonatorzellenwand 7 trifft und dort im Oberflächenabschnitt 9 absorbiert wird. Wie in Bezug auf die Figur 1 bereits beschrieben, kann mittels der ersten elektromagnetischen Strahlung 1 ein Verfahren zum Bestimmen der aktuell geltenden Resonanzfrequenz des akustischen Resonators durchgeführt werden. Das Ergebnis dieses Verfahrens kann dann dazu genutzt werden, die Modulationsfrequenz der zweiten elektromagnetischen Strahlung 2 auf die aktuell gültige Resonanzfrequenz des akustischen Resonators anzupassen.

Die zweite elektromagnetische Strahlung gelangt bei der in Figur 2 dargestellten Ausführungsform durch ein erstes Fenster 8 in den akustischen Resonator. Die zweite elektromagnetische Strahlung weist dabei eine Wellenlänge auf, die einer Absorptionswellenlänge des sich im akustischen Senator befindlichen Probenfluides entspricht. Folglich kommt es entlang des Strahlengangs der zweiten elektromagnetischen Strahlung 2 zu einer lokalen Erwärmung des Probenfluides und somit - auch aufgrund der Modulation der zweiten elektromagnetischen Strahlung - zur Ausbildung einer Schallwelle, die von dem Mikrofon 6 als akustisches Antwortsignal wahrgenommen wird, das durch die Absorption der zweiten elektromagnetischen Strahlung durch das Probenfluid erzeugt wird. Die zweite elektromagnetische Strahlung gelangt dann durch das zweite Fenster 8' wieder aus dem akustischen Resonator heraus, ohne dass die zweite elektromagnetische Strahlung von einem Element des akustischen Resonators absorbiert wird.

Das akustische Antwortsignal bzw. die durch die zweite elektromagnetische Strahlung erzeugte Schallwelle ist in den Figuren 2 bis 4 nicht dargestellt. Vielmehr ist in den Figuren 2 bis 4 und auch in der Figur 1 die durch die Absorption der ersten elektromagnetischen Strahlung erzeugte Schallwelle 10 dargestellt.

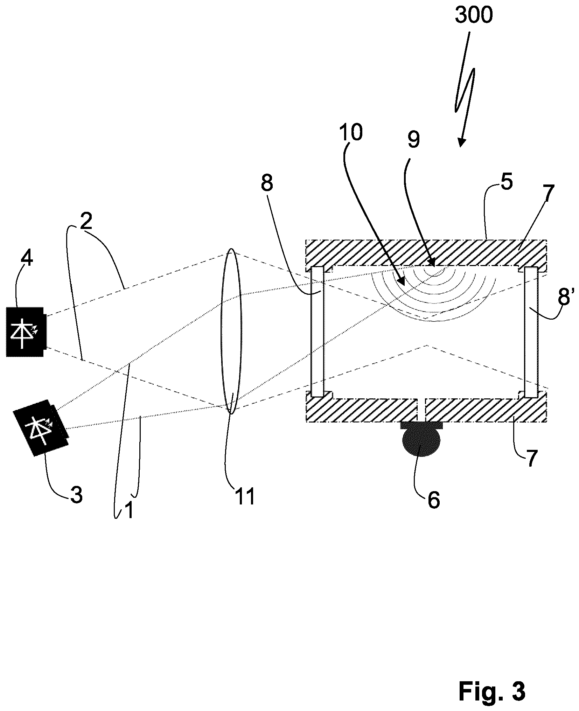

In Figur 3 ist eine dritte Ausführungsform der erfindungsgemäßen Vorrichtung 300. Diese unterscheidet sich von der in Figur 2 dargestellten Vorrichtung 200 darin, dass die zweite Strahlungsquelle 4 einen divergenten und keinen parallelen Strahlengang erzeugt. Zudem werden die erste elektromagnetische Strahlung 1 und die zweite elektromagnetische Strahlung 2 gemeinsam über eine Linse 11 in den akustischen Resonator 5 eingekoppelt, und zwar beide über ein erstes Fenster 8 der Resonatorzelle 7. Das Fenster 8 ist derart ausgebildet, dass es sowohl für die erste als auch für die zweite elektromagnetische Strahlung transparent ist. Die Linse 11 ist derart angeordnet und ausgebildet, dass die erste elektromagnetische Strahlung 1 durch die Linse 11 auf das Absorptionselement, hier die Resonatorzellenwand 7, gelenkt wird und die zweite elektromagnetische Strahlung 2 durch dieselbe Linse 11 derart geführt wird, dass sie die Resonatorzelle 5 ohne Wandberührung passiert.

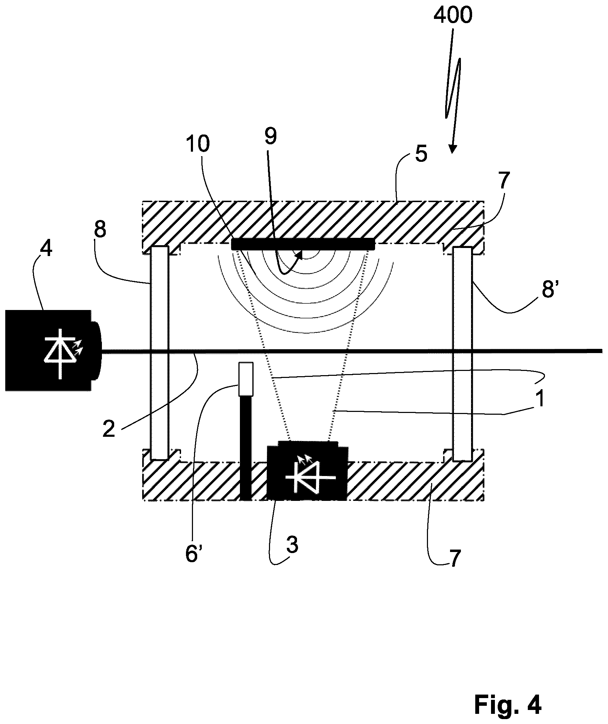

In Figur 4 ist eine vierte Ausführungsform 400 der erfindungsgemäßen Vorrichtung und des erfindungsgemäßen Verfahrens gezeigt. Diese unterscheidet sich von der in Figur 2 dargestellten Ausführungsform 200 darin, dass die erste Strahlungsquelle 3 zum Erzeugen der ersten elektromagnetischen Strahlung 1 innerhalb des akustischen Resonators 5 angeordnet ist bzw. derart mit dem akustischen Resonator 5 verbunden ist, dass die erste elektromagnetische Strahlung 1 innerhalb des akustischen Resonators 5 erzeugt wird. Zudem ist eine Absorberplatte 12 als Absorptionselement vorgesehen, wobei die Absorberplatte 12 mit der Resonatorzelle 5 fest verbunden ist. In der in Figur 4 dargestellten Ausführungsform ist die erste Strahlungsquelle 3 in die Resonatorzellenwand integriert, wobei die betreffende Resonatorzellenwand 7 dem absorbierenden Oberflächenabschnitt 9 der Absorberplatte 12 gegenüberliegt, sodass die erste elektromagnetische Strahlung 1 in einem im Wesentlichen rechten Winkel zur zweiten elektromagnetischen Strahlung 2 geführt wird und auf die der ersten Strahlungsquelle 3 gegenüberliegende Absorberplatte 12 trifft. Zur Messung eines akustischen Antwortsignals ist anders als bei der in der Figur 2 dargestellten Ausführungsform 200 ein akustischer Flusssensor 6 vorgesehen, der an einer Resonatorzellenwand 7 befestigt ist und der derart in der von dem akustischen Resonator eingeschlossene Kavität angeordnet ist, dass er nicht in die Strahlengänge der ersten und zweiten elektromagnetischen Strahlung hineinragt.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

### Bezugszeichen

- 1: Erste elektromagnetische Strahlung
- 2: Zweite elektromagnetische Strahlung
- 3: Erste Strahlungsquelle
- 4: Zweite Strahlungsquelle
- 5: Akustischer Resonator (Resonatorzelle)
- 6: Mikrofon
- 6': Akustischer Flusssensor
- 7: Resonatorzellenwand
- 8: Erstes Fenster
- 8`: Zweites Fenster
- 9: Oberflächenabschnitt
- 10: Schallwelle (akustisches Antwortsignal), die durch eine in Schritt b) erfolgte Absorption der ersten elektromagnetischen Strahlung erzeugt wird
- 11: Linse
- 12: Absorberplatte

- 100: Erste Ausführungsform der Vorrichtung
- 200: Zweite Ausführungsform der Vorrichtung
- 300: Dritte Ausführungsform der Vorrichtung
- 400: Vierte Ausführungsform der Vorrichtung

- A: Amplitude des akustischen Antwortsignals
- ϕ: Phase des akustischen Antwortsignals
- F: Modulationsfrequenz
- A(F): Amplitudengang
- ϕ(F): Phasengang

## Patentansprüche

1. Verfahren mit folgenden Schritten:
a) Gemäß einer ersten Alternative, Bereitstellen eines akustischen Resonators (5), wobei der akustische Resonator (5) ein Absorptionselement (7) mit einem Oberflächenabschnitt (9) aufweist,
Bereitstellen eines Probenfluides oder eines das Probenfluid aufweisenden Fluidgemisches, sodass der akustische Resonator mit dem Probenfluid oder dem das Probenfluid aufweisenden Fluidgemisch gefüllt ist,
wobei der Oberflächenabschnitt (9) des Absorptionselements (7) in Kontakt mit dem Probenfluid oder dem das Probenfluid aufweisenden Fluidgemisch steht,
oder
gemäß einer zweiten Alternative, Bereitstellen eines akustischen Resonators (5), Bereitstellen eines ein Probenfluid aufweisenden Fluidgemisches, sodass der akustische Resonator mit dem Fluidgemisch gefüllt ist,
wobei das Fluidgemisch zusätzlich zum Probenfluid zumindest ein Absorptionsfluid oder einen oder mehrere Absorptionspartikel aufweist,
b) Gemäß der ersten Alternative, Bestrahlen des Oberflächenabschnitts (9) des Absorptionselements mit einer ersten elektromagnetischen Strahlung (1), sodass das Absorptionselement (7) im Bereich des Oberflächenabschnitts (9) die erste elektromagnetische Strahlung (1) zumindest teilweise absorbiert,
oder
gemäß der zweiten Alternative, Bestrahlen des Fluidgemisches mit einer ersten elektromagnetischen Strahlung (1), sodass das Absorptionsfluid oder die Absorptionspartikel die erste elektromagnetische Strahlung zumindest teilweise absorbieren,
sodass bei beiden Alternativen durch die Absorption Druckenergie in dem Probenfluid oder dem das Probenfluid aufweisenden Fluidgemisch erzeugt wird, wobei die erste elektromagnetische Strahlung (1) mit einer Modulationsfrequenz amplituden- oder frequenzmoduliert ist,
c) Messen eines akustischen Antwortsignals (10) des akustischen Resonators (5), das durch die in Schritt b) erfolgte Absorption der ersten elektromagnetischen Strahlung (1) erzeugt wird,
d) Bestimmen zumindest einer Amplitude (A) oder Phase (ϕ) des akustischen Antwortsignals (10), das die Modulationsfrequenz der ersten elektromagnetischen Strahlung (1) aufweist,
**dadurch gekennzeichnet, dass**
in einem weiteren Schritt eine Eigenschaft des akustischen Resonators (5) bestimmt wird, wobei einer der folgenden Schritte oder beide folgenden Schritte vorgesehen sind:
e) Bestimmen einer Resonanzfrequenz des akustischen Resonators (5) aus zumindest der in Schritt d) bestimmten Amplitude (A) oder Phase (ϕ),
f) Bestimmen einer Dämpfungseigenschaft des akustischen Resonators (5).

2. Verfahren gemäß Anspruch 1, wobei der Schritt b) mindestens zweimal durchgeführt wird, wobei die erste elektromagnetische Strahlung (1) bei einem ersten Durchführen von Schritt b) mit einer ersten Modulationsfrequenz (F1) moduliert wird und bei einem zweiten Durchführen von Schritt b) mit einer zweiten Modulationsfrequenz (F2) moduliert wird, wobei sich die zweite Modulationsfrequenz (F2) von der ersten Modulationsfrequenz (F1) unterscheidet, sodass in Schritt d) mindestens eine erste Amplitude (A1) oder Phase (ϕ1) des akustischen Antwortsignals (10) für die erste Modulationsfrequenz (F1), und eine zweite Amplitude (A2) oder Phase (ϕ2) des akustischen Antwortsignals (10) für die zweite Modulationsfrequenz (F2), bestimmt werden.

3. Verfahren gemäß Anspruch 2, wobei folgender weiterer Schritt vorgesehen ist:
g) Bestimmen eines von der Modulationsfrequenz (F) abhängigen Amplitudenganges (A(F)) oder Phasenganges (ϕ(F)) aus den zumindest zwei in Schritt d) bestimmten Amplituden (A1 und A2) oder Phasen (ϕ1 und ϕ2) des akustischen Antwortsignals (10).

4. Verfahren gemäß einem der voranstehenden Ansprüche, wobei in Schritt b) die erste elektromagnetische Strahlung (1) mit einem Rechtecksignal amplitudenmoduliert wird, so dass ein breitbandiges akustisches Antwortsignal (10) des akustischen Resonators (5) erzeugt wird, wobei folgender weiterer Schritt vorgesehen ist:
h) Bestimmen eines von der Modulationsfrequenz (F) abhängigen Amplitudenganges (A(F)) oder Phasenganges (cp(F)) aus dem in Schritt c) gemessenen breitbandigen akustischen Antwortsignal (10), vorzugsweise durch Anwenden einer Frequenzanalyse und besonders bevorzugt durch Anwenden einer Fourier-Transformation auf das in Schritt c) gemessene breitbandige akustische Antwortsignal (10).

5. Verfahren gemäß einem der voranstehenden Ansprüche, wobei die erste elektromagnetische Strahlung (1) eine Frequenz des elektromagnetischen Wechselfeldes aufweist, wobei die Frequenz des elektromagnetischen Wechselfeldes ungleich einer Absorptionsfrequenz des Probenfluides ist, wobei die erste elektromagnetische Strahlung (1) vorzugsweise eine Wellenlänge oder einen Wellenlängenbereich aufweist, die oder der zwischen 380 nm und 1200 nm liegt.

6. Verfahren gemäß einem der voranstehenden Ansprüche, wobei in einem weiteren Schritt eine Eigenschaft des im akustischen Resonator befindlichen Fluides oder Fluidgemisches bestimmt wird, wobei insbesondere einer der folgenden Schritte oder beide folgenden Schritte vorgesehen sein können:
i) Bestimmen einer Schallgeschwindigkeit des im akustischen Resonator befindlichen Fluides oder Fluidgemisches oder
j) Bestimmen einer Dichte des im akustischen Resonator befindlichen Fluides oder Fluidgemisches oder einer Konzentration des Probenfluides, falls das Probenfluid ein Bestandteil eines im akustischen Resonator befindlichen Fluidgemisches ist.

7. Photoakustisches Verfahren zum Bestimmen einer Eigenschaft des Probenfluides, wobei das Probenfluid ein Probengas ist, mit den folgenden Schritten:
aa) Bestimmen einer Resonanzfrequenz des akustischen Resonators (5) mit einem Verfahren gemäß Anspruch 1, wobei das Verfahren gemäß Anspruch 1 den Schritt e) aufweist,
bb) Bestrahlen des Probengases oder des das Probengas aufweisenden Gasgemisches mit einer zweiten elektromagnetischen Strahlung (2),
wobei die zweite elektromagnetische Strahlung (2) zumindest eine Frequenz ihres elektromagnetischen Wechselfeldes aufweist, die gleich einer Absorptionsfrequenz des Probengases ist, und
wobei die zweite elektromagnetische Strahlung (2) mit einer Modulationsfrequenz amplituden- oder frequenzmoduliert ist, wobei die Modulationsfrequenz im Wesentlichen gleich der in Schritt aa) bestimmten Resonanzfrequenz des akustischen Resonators ist,
cc) Messen eines akustischen Antwortsignals des akustischen Resonators (5), das durch eine in Schritt bb) erfolgte Absorption der zweiten elektromagnetischen Strahlung durch das Probengas erzeugt wird,
dd) Bestimmen der Eigenschaft des Probengases aus dem akustischen Antwortsignal des akustischen Resonators (5).

8. Verfahren gemäß Anspruch 7, wobei die Eigenschaft des Probengases die Dichte oder Konzentration des Probengases ist.

9. Verfahren gemäß einem der Ansprüche 7 oder 8, wobei die Eigenschaft des Probengases mehrfach über eine Verfahrensdauer hinweg zumindest mit den Schritten bb), cc) und dd) bestimmt wird, wobei während der Verfahrensdauer mehrfach, vorzugweise periodisch und besonders bevorzugt vor jedem Durchführen des Schritts bb) die Resonanzfrequenz des akustischen Resonators (5) mittels Schritt aa) bestimmt wird, sodass bei einem Durchführen von Schritt bb) die Modulationsfrequenz der zweiten elektromagnetischen Strahlung (2) stets gleich der aktuell bestimmten Resonanzfrequenz ist.

10. Verfahren gemäß einem der Ansprüche 7 bis 9, wobei die zweite elektromagnetische Strahlung (2) eine Wellenlänge oder einen Wellenlängenbereich aufweist, die oder der zwischen 780 nm und 1 mm liegt.

11. Verfahren gemäß einem der Ansprüche 7 bis 10, wobei die zweite elektromagnetische Strahlung (2) derart geführt wird, dass sie nicht von einer Oberfläche des akustischen Resonators (5) absorbiert wird.

12. Vorrichtung mit
zumindest einer Strahlungsquelle (3) zum Erzeugen einer ersten elektromagnetischen Strahlung (1),
einem akustischen Resonator (5), der ein Absorptionselement (7) mit einem Oberflächenabschnitt (9) aufweist, wobei der Oberflächenabschnitt (9) des Absorptionselements (7) derart angeordnet ist, dass der Oberflächenabschnitt (7) in Kontakt mit einem Probenfluid oder einem das Probenfluid aufweisenden Fluidgemisch steht, wenn der akustische Resonator (5) mit dem Probenfluid oder dem das Probenfluid aufweisenden Fluidgemisch befüllt ist,
wobei das Absorptionselement (7) derart ausgebildet ist, dass es im Bereich des Oberflächenabschnitts (9) die erste elektromagnetische Strahlung (1) zumindest teilweise absorbiert, sodass Druckenergie in dem Probenfluid oder dem das Probenfluid aufweisenden Fluidgemisch erzeugt wird, wenn der akustische Resonator (5) mit dem Probenfluid oder dem das Probenfluid aufweisenden Fluidgemisch befüllt ist,
einem Schallsensor (6, 6') zum Messen eines akustischen Antwortsignals des akustischen Resonators (5),
wobei die zumindest eine Strahlungsquelle (3) und der akustische Resonator (5) derart ausgebildet und angeordnet sind, dass die erste elektromagnetische Strahlung (1) auf den Oberflächenabschnitt (9) des Absorptionselements (7) trifft,
**dadurch gekennzeichnet, dass**
die Vorrichtung derart eingerichtet ist, dass
zumindest einer Amplitude (A) oder Phase (ϕ) des akustischen Antwortsignals (10) bestimmt wird und
eine Eigenschaft des akustischen Resonators (5) bestimmt wird, wobei einer der folgenden Schritte oder beide folgenden Schritte vorgesehen sind:
Bestimmen einer Resonanzfrequenz des akustischen Resonators (5) aus zumindest der Amplitude (A) oder Phase (ϕ),
Bestimmen einer Dämpfungseigenschaft des akustischen Resonators (5).

13. Vorrichtung gemäß Anspruch 12, wobei eine Strahlungsquelle (3, 4) zum Erzeugen einer zweiten elektromagnetischen Strahlung (2) vorgesehen ist,
wobei der akustische Resonator (5) eine erste Öffnung oder ein erstes Fenster (8), das zumindest für die zweite elektromagnetische Strahlung (2) zumindest teilweise transparent ist, aufweist, wobei der akustische Resonator (5) und die Strahlungsquelle (3, 4) der zweiten elektromagnetischen Strahlung (2) derart ausgebildet und angeordnet sind, dass die zweite elektromagnetische Strahlung (2) durch die erste Öffnung oder das erste Fenster (8) in den akustischen Resonator (5) gelangt.

14. Vorrichtung gemäß Anspruch 13, wobei der akustische Resonator (5) eine zweite Öffnung oder ein zweites Fenster (8') aufweist, welches zumindest für die zweite elektromagnetische Strahlung (2) zumindest teilweise transparent ist, wobei der akustische Resonator (5) und die Strahlungsquelle (3, 4) der zweiten elektromagnetischen Strahlung (2) derart ausgebildet und angeordnet sind, dass die zweite elektromagnetische Strahlung (2) durch die zweite Öffnung oder das zweite Fenster (8') aus dem akustischen Resonator (5) heraus gelangt.

15. Vorrichtung gemäß einem der Ansprüche 12 bis 14, wobei der akustische Resonator derart ausgebildet ist, dass sich durch ein Bestrahlen des Oberflächenabschnitts (9) mit der ersten elektromagnetischen Strahlung (1) im Falle eines mit dem Probenfluid gefüllten akustischen Resonators (5) innerhalb des akustischen Resonators (5) eine stehende Schallwelle (10) mit zumindest einem Druckmaximum ausbildet, wobei der akustische Resonator (5) und die Strahlungsquelle (3) der ersten elektromagnetischen Strahlung (1) derart ausgebildet und angeordnet sind, dass der von der ersten elektromagnetischen Strahlung (1) bestrahlte Oberflächenabschnitt (9) an einer Stelle angeordnet ist, die im Wesentlichen gleich der Stelle des Druckmaximums der stehenden Schallwelle (10) ist.

16. Vorrichtung gemäß einem der Ansprüche 12 bis 15, wobei eine erste Strahlungsquelle (3) zum Erzeugen der ersten elektromagnetischen Strahlung (1) und eine separate zweite Strahlungsquelle (4) zum Erzeugen der zweiten elektromagnetischen Strahlung (2) vorgesehen sind, wobei vorzugsweise die erste Strahlungsquelle (3) eine LED im sichtbaren Spektralbereich und die zweite Strahlungsquelle (4) eine LED im infraroten Spektralbereich ist.

17. Vorrichtung gemäß einem der Ansprüche 13 bis 14 und 16, wobei die Strahlungsquelle (3) der ersten elektromagnetischen Strahlung (1) derart ausgebildet und angeordnet ist, dass die erste elektromagnetische Strahlung (1) durch eine Öffnung oder ein Fenster (8) in den akustischen Resonator (5) gelangt, wobei im Falle eines Fensters das Fenster (8) sowohl für die erste als auch für die zweite elektromagnetische Strahlung (1, 2) zumindest teilweise transparent ist, oder alternativ die Strahlungsquelle (3) der ersten elektromagnetischen Strahlung (1) derart ausgebildet und angeordnet ist, dass die erste elektromagnetische Strahlung (1) innerhalb des akustischen Resonators (5) erzeugt wird.

18. Verwendung einer Vorrichtung gemäß einem der Ansprüche 12 bis 17 zur Abgasmessung in einem Kraftfahrzeug oder zur Schadstoffmessung in der Umgebungsluft.

## Claims

1. A method comprising the following steps:
a) according to a first alternative, providing an acoustic resonator (5), the acoustic resonator (5) comprising an absorption element (7) having a surface portion (9),
providing a sample fluid or a fluid mixture comprising the sample fluid such that the acoustic resonator is filled with the sample fluid or the fluid mixture comprising the sample fluid,
wherein the surface portion (9) of the absorption element (7) is in contact with the sample fluid or the fluid mixture comprising the sample fluid,
or
according to a second alternative, providing an acoustic resonator (5),
providing a fluid mixture comprising a sample fluid such that the acoustic resonator is filled with the fluid mixture,
wherein the fluid mixture comprises, in addition to the sample fluid, at least one absorption fluid or one or more absorption particles,
b) according to the first alternative, irradiating the surface portion (9) of the absorption element with a first electromagnetic radiation (1) such that the absorption element (7) at least partially absorbs the first electromagnetic radiation (1) in the region of the surface portion (9),
or
according to the second alternative, irradiating the fluid mixture with a first electromagnetic radiation (1) such that the absorption fluid or the absorption particles at least partially absorb the first electromagnetic radiation,
such that, in both alternatives, by way of the absorption, pressure energy is produced in the sample fluid or the fluid mixture comprising the sample fluid, wherein the first electromagnetic radiation (1) is amplitude modulated or frequency modulated at a modulation frequency,
c) measuring an acoustic response signal (10) of the acoustic resonator (5) generated by the absorption of the first electromagnetic radiation (1) taking place in step b),
d) determining at least one amplitude (A) or phase (ϕ) of the acoustic response signal (10) having the modulation frequency of the first electromagnetic radiation (1)
**characterized in that**
in a further step a property of the acoustic resonator (5) is determined, wherein one of the following steps or both followings steps is provided:
e) determining a resonant frequency of the acoustic resonator (5) from at least the amplitude (A) or the phase (ϕ) determined in step d),
f) determining a damping property of the acoustic resonator (5).

2. The method according to claim 1, wherein step b) is performed at least twice, wherein in a first performance of step b), the first electromagnetic radiation (1) is modulated at a first modulation frequency (F1) and in a second performance of step b), is modulated at a second modulation frequency (F2), wherein the second modulation frequency (F2) is different from the first modulation frequency (F1), such that in step d) at least a first amplitude (A1) or phase (ϕ1) of the acoustic response signal (10) for the first modulation frequency (F1), and a second amplitude (A2) or phase (ϕ2) of the acoustic response signal (10) for the second modulation frequency (F2), are determined.

3. The method according to claim 2, wherein the following further step is provided:
g) determining an amplitude response (A(F)) or phase response (cp(F)) dependent upon the modulation frequency (F) from the at least two amplitudes (A1 and A2) or phases (ϕ1 and ϕ2) determined in step d) of the acoustic response signal (10).

4. The method according to any one of the preceding claims, wherein in step b) the first electromagnetic radiation (1) is amplitude modulated or frequency modulated such that a wide-band acoustic response signal (10) of the acoustic resonator (5) is generated, wherein the following further step is provided:
h) determining an amplitude response (A(F)) or phase response (cp(F)) dependent upon the modulation frequency (F) from the wide-band acoustic response signal (10) measured in step c), preferably by applying a frequency analysis, and particularly preferably by applying a Fourier transform to the wide-band acoustic response signal (10) measured in step c).

5. The method according to any one of the preceding claims, wherein the first electromagnetic radiation (1) comprises a frequency of the alternating electromagnetic field, wherein the frequency of the alternating electromagnetic field is not equal to an absorption frequency of the sample fluid, wherein the first electromagnetic radiation (1) preferably comprises a wavelength or a wavelength range that is between 380 nm and 1200 nm.

6. The method according to any one of the preceding claims, wherein in a further step, a property of the fluid or fluid mixture located in the acoustic resonator is determined, wherein in particular one of the following steps or both of the following steps can be provided:
i) determining a velocity of sound of the fluid or fluid mixture located in the acoustic resonator, or
j) determining a density of the fluid or fluid mixture located in the acoustic resonator, or a concentration of the sample fluid, if the sample fluid is a constituent of a fluid mixture located in the acoustic resonator.

7. A photoacoustic method for determining a property of the sample fluid, wherein the sample fluid is a sample gas, having the following steps:
aa) determining a resonant frequency of the acoustic resonator (5) using a method according to claim 1, the method according to claim 1 comprising step e),
bb) irradiating the sample gas or the gaseous mixture comprising the sample gas with a second electromagnetic radiation (2),
wherein the second electromagnetic radiation (2) comprises at least one frequency of its alternating electromagnetic field that is equal to an absorption frequency of the sample gas, and
wherein the second electromagnetic radiation (2) is amplitude modulated or frequency modulated at a modulation frequency, wherein the modulation frequency is substantially equal to the resonant frequency of the acoustic resonator determined in step aa),
cc) measuring an acoustic response signal of the acoustic resonator (5) generated by an absorption by the sample gas of the second electromagnetic radiation which takes place in step bb),
dd) determining the property of the sample gas from the acoustic response signal of the acoustic resonator (5).

8. The method according to claim 7, wherein the property of the sample gas is the density or concentration of the sample gas.

9. The method according to any one of claims 7 or 8, wherein the property of the sample gas is determined multiple times over a process duration at least with steps bb), cc) and dd), wherein, during the duration of the method, preferably periodically and particularly preferably before each performance of the step bb), the resonant frequency of the acoustic resonator (5) is determined by means of step aa), such that, when performing step bb), the modulation frequency of the second electromagnetic radiation (2) is always equal to the currently determined resonant frequency.

10. The method according to any one of claims 7 to 9, wherein the second electromagnetic radiation (2) has a wavelength or wavelength range that is between 780 nm and 1 mm.

11. The method according to any one of claims 7 to 10, wherein the second electromagnetic radiation (2) is guided such that it is not absorbed by a surface of the acoustic resonator (5).

12. A device comprising
at least one radiation source (3) for generating a first electromagnetic radiation (1), an acoustic resonator (5) comprising an absorption element (7) having a surface portion (9), the surface portion (9) of the absorption element (7) being arranged such that the surface portion (7) is in contact with a sample fluid or a fluid mixture comprising the sample fluid when the acoustic resonator (5) is filled with the sample fluid or the fluid mixture comprising the sample fluid,
wherein the absorption element (7) is configured to at least partially absorb the first electromagnetic radiation (1) in the region of the surface portion (9) such that pressure energy is generated in the sample fluid or the fluid mixture comprising the sample fluid when the acoustic resonator (5) is filled with the sample fluid or the fluid mixture comprising the sample fluid,
a sonic sensor (6, 6') for measuring an acoustic response signal of the acoustic resonator (5),
wherein the at least one radiation source (3) and the acoustic resonator (5) are configured and arranged such that the first electromagnetic radiation (1) is incident upon the surface portion (9) of the absorption element (7),
**characterized in that**
the device is configured in such a way that
at least an amplitude (A) or a phase (ϕ) of the acoustic response signal (10) is determined, and
a property of the acoustic resonator (5) is determined, wherein one of the following steps or both followings steps is provided:
determining a resonant frequency of the acoustic resonator (5) from at least one amplitude (A) or phase (ϕ),
determining a damping property of the acoustic resonator (5).

13. The device according to claim 12, wherein a radiation source (3, 4) is provided for generating a second electromagnetic radiation (2),
wherein the acoustic resonator (5) comprises a first opening or a first window (8) at least partially transparent for the second electromagnetic radiation (2), wherein the acoustic resonator (5) and the radiation source (3, 4) of the second electromagnetic radiation (2) are configured and arranged such that the second electromagnetic radiation (2) passes through the first opening or the first window (8) into the acoustic resonator (5).

14. The device according to claim 13, wherein the acoustic resonator (5) comprises a second opening or a second window (8'), which is at least partially transparent for the second electromagnetic radiation (2), wherein the acoustic resonator (5) and the radiation source (3, 4) of the second electromagnetic radiation (2) are configured and arranged, such that the second electromagnetic radiation (2) passes through the second opening or the second window (8') out of the acoustic resonator (5).

15. The device according to any one of claims 12 to 14, wherein the acoustic resonator is configured so that by irradiating the surface portion (9) with the first electromagnetic radiation (1) in the case of an acoustic resonator (5) filled with the sample fluid within the acoustic resonator (5) a standing sound wave (10) with at least one pressure maximum forms, wherein the acoustic resonator (5) and the radiation source (3) of the first electromagnetic radiation (1) are configured and arranged such that the surface portion (9) irradiated by the first electromagnetic radiation (1) is arranged at a location, which is substantially equal to the location of the pressure maximum of the standing sound wave (10).

16. The device according to any one of claims 12 to 15, wherein a first radiation source (3) for generating the first electromagnetic radiation (1) and a separate second radiation source (4) for generating the second electromagnetic radiation (2) are provided, wherein preferably the first radiation source (3) is an LED in the visible spectral region and the second radiation source (4) is an LED in the infrared spectral region.

17. The device according to any one of claims 13 to 14 and 16, wherein the radiation source (3) of the first electromagnetic radiation (1) is configured and arranged such that the first electromagnetic radiation (1) enters the acoustic resonator (5) through an opening or a window (8), wherein, in the case of a window, the window (8) is at least partially transparent for both the first and second electromagnetic radiation (1, 2), or alternatively, the radiation source (3) of the first electromagnetic radiation (1) is configured and arranged such that the first electromagnetic radiation (1) is generated within the acoustic resonator (5).

18. Use of a device according to any one of claims 12 to 17 for exhaust gas measurement in a motor vehicle or for pollutant measurement in ambient air.

## Revendications

1. Procédé comprenant les étapes suivantes consistant à :
a) selon une première variante, mettre à disposition un résonateur acoustique (5), dans lequel le résonateur acoustique (5) présente un élément d'absorption (7) ayant un segment de surface (9),
mettre à disposition un fluide d'échantillon, ou un mélange de fluides contenant le fluide d'échantillon, de sorte que le résonateur acoustique est rempli avec le fluide d'échantillon ou avec le mélange de fluides contenant le fluide d'échantillon,
dans lequel le segment de surface (9) de l'élément d'absorption (7) se trouve en contact avec le fluide d'échantillon ou avec le mélange de fluides contenant le fluide d'échantillon,
ou
selon une seconde variante, mettre à disposition un résonateur acoustique (5), fournir un mélange de fluides contenant un échantillon de fluide de sorte que le résonateur acoustique est rempli avec le mélange de fluides,
dans lequel le mélange de fluides présente, en plus du fluide d'échantillon, au moins un fluide d'absorption ou une ou plusieurs particule(s) d'absorption,
b) selon la première variante, irradier le segment de surface (9) de l'élément d'absorption avec un premier rayonnement électromagnétique (1) de sorte que l'élément d'absorption (7) absorbe au moins partiellement le premier rayonnement électromagnétique (1) dans la région du segment de surface (9), ou
selon la seconde variante, irradier le mélange de fluides avec un premier rayonnement électromagnétique (1) de sorte que le fluide d'absorption ou les particules d'absorption absorbe(nt) au moins partiellement le premier rayonnement électromagnétique,
de sorte que, dans les deux variantes, l'absorption génère une énergie de pression dans le fluide d'échantillon ou dans le mélange de fluides contenant le fluide d'échantillon, le premier rayonnement électromagnétique (1) étant modulé en amplitude ou en fréquence avec une fréquence de modulation,
c) mesurer un signal de réponse acoustique (10) du résonateur acoustique (5), qui est généré par l'absorption du premier rayonnement électromagnétique (1) survenue à l'étape b),
d) déterminer au moins une amplitude (A) ou une phase (ϕ) du signal de réponse acoustique (10), qui présente la fréquence de modulation du premier rayonnement électromagnétique (1),
**caractérisé en ce que**
dans une étape ultérieure, on détermine une propriété du résonateur acoustique (5), une des étapes suivantes ou les deux étapes suivantes étant prévues, qui consistent à :
e) déterminer une fréquence de résonance du résonateur acoustique (5) à partir d'au moins l'amplitude (A) ou la phase (ϕ) déterminée à l'étape d),
f) déterminer une propriété d'amortissement du résonateur acoustique (5).

2. Procédé selon la revendication 1, dans lequel l'étape b) est mise en oeuvre au moins deux fois, dans lequel le premier rayonnement électromagnétique (1) est modulé avec une première fréquence de modulation (F1) lors d'une première mise en oeuvre de l'étape b), et est modulé avec une seconde fréquence de modulation (F2) lors d'une seconde mise en oeuvre de l'étape b), la seconde fréquence de modulation (F2) étant différente de la première fréquence de modulation (F1), de sorte qu'à l'étape d), au moins une première amplitude (A1) ou phase (ϕ1) du signal de réponse acoustique (10) est déterminée pour la première fréquence de modulation (F1), et une seconde amplitude (A2) ou phase (ϕ2) du signal de réponse acoustique (10) est déterminée pour la seconde fréquence de modulation (F2).

3. Procédé selon la revendication 2, dans lequel l'étape ultérieure suivante est prévue, qui consiste à :
g) déterminer une réponse en amplitude (A(F)), ou une réponse en phase (ϕ(F)), dépendante de la fréquence de modulation (F) à partir des amplitudes (A1 et A2) ou phases (ϕ1 et ϕ2), au moins au nombre de deux, du signal de réponse acoustique (10) déterminées à l'étape d).

4. Procédé selon l'une des revendications précédentes, dans lequel, à l'étape b), le premier rayonnement électromagnétique (1) est modulé en amplitude avec un signal rectangulaire de manière à produire un signal de réponse acoustique à large bande (10) du résonateur acoustique (5), l'étape ultérieure suivante étant prévue, qui consiste à :
h) déterminer une réponse en amplitude (A(F)), ou une réponse en phase (ϕ(F)), dépendante de la fréquence de modulation (F) à partir du signal de réponse acoustique à large bande (10) mesuré à l'étape c), de manière préférée en appliquant une analyse de fréquence et de manière particulièrement préférée en appliquant une transformation de Fourier au signal de réponse acoustique à large bande (10) mesuré à l'étape c).

5. Procédé selon l'une des revendications précédentes, dans lequel le premier rayonnement électromagnétique (1) présente une fréquence du champ électromagnétique alternatif, la fréquence du champ électromagnétique alternatif étant différente d'une fréquence d'absorption du fluide d'échantillon, le premier rayonnement électromagnétique (1) présentant de manière préférée une longueur d'onde ou une plage de longueurs d'onde comprise entre 380 nm et 1 200 nm.

6. Procédé selon l'une des revendications précédentes, dans lequel, dans une étape ultérieure, on détermine une propriété du fluide, ou du mélange de fluides, se trouvant dans le résonateur acoustique, en particulier une des étapes suivantes ou les deux étapes suivantes pouvant être prévues, qui consistent à :
i) déterminer une vitesse du son du fluide, ou du mélange de fluides, se trouvant dans le résonateur acoustique, ou
j) déterminer une densité du fluide, ou du mélange de fluides, se trouvant dans le résonateur acoustique, ou une concentration du fluide d'échantillon si le fluide d'échantillon est un composant d'un mélange de fluides se trouvant dans le résonateur acoustique.

7. Procédé photo-acoustique de détermination d'une propriété du fluide d'échantillon, dans lequel le fluide d'échantillon est un gaz d'échantillon, comprenant les étapes suivantes consistant à :
aa) déterminer une fréquence de résonance du résonateur acoustique (5) grâce à un procédé selon la revendication 1, le procédé selon la revendication 1 comprenant l'étape e),
bb) irradier le gaz d'échantillon ou le mélange de gaz contenant le gaz d'échantillon avec un second rayonnement électromagnétique (2),
le second rayonnement électromagnétique (2) présentant au moins une fréquence de son champ électromagnétique alternatif qui est égale à une fréquence d'absorption du gaz d'échantillon, et
le second rayonnement électromagnétique (2) étant modulé en amplitude ou en fréquence avec une fréquence de modulation, la fréquence de modulation étant essentiellement égale à la fréquence de résonance du résonateur acoustique déterminée à l'étape aa),
cc) mesurer un signal de réponse acoustique du résonateur acoustique (5) généré par une absorption du second rayonnement électromagnétique par le gaz d'échantillon survenue à l'étape bb),
dd) déterminer la propriété du gaz d'échantillon à partir du signal de réponse acoustique du résonateur acoustique (5).

8. Procédé selon la revendication 7, dans lequel la propriété du gaz d'échantillon est la densité ou la concentration du gaz d'échantillon.

9. Procédé selon l'une des revendications 7 ou 8, dans lequel la propriété du gaz d'échantillon est déterminée plusieurs fois sur une durée de procédé au moins grâce aux étapes bb), cc) et dd), la fréquence de résonance du résonateur acoustique (5) étant déterminée au moyen de l'étape aa) plusieurs fois pendant la durée du procédé, de manière préférée périodiquement et de manière particulièrement préférée avant chaque mise en oeuvre de l'étape bb), de sorte que la fréquence de modulation du second rayonnement électromagnétique (2) est toujours égale, lorsque l'étape bb) est mise en oeuvre, à la fréquence de résonance actuellement déterminée.

10. Procédé selon l'une des revendications 7 à 9, dans lequel le second rayonnement électromagnétique (2) présente une longueur d'onde ou une plage de longueurs d'onde comprise entre 780 nm et 1 mm.

11. Procédé selon l'une des revendications 7 à 10, dans lequel le second rayonnement électromagnétique (2) est guidé de manière à ne pas être absorbé par une surface du résonateur acoustique (5).

12. Dispositif comprenant :
au moins une source de rayonnement (3) permettant de générer un premier rayonnement électromagnétique (1),
un résonateur acoustique (5) qui présente un élément d'absorption (7) ayant un segment de surface (9), dans lequel le segment de surface (9) de l'élément d'absorption (7) est agencé de telle manière que le segment de surface (7) se trouve en contact avec un fluide d'échantillon, ou un mélange de fluides contenant le fluide d'échantillon, lorsque le résonateur acoustique (5) est rempli avec le fluide d'échantillon ou avec le mélange de fluides contenant le fluide d'échantillon,
dans lequel l'élément d'absorption (7) est formé de manière à absorber au moins partiellement le premier rayonnement électromagnétique (1) dans la région du segment de surface (9), de sorte que de l'énergie de pression est générée dans le fluide d'échantillon, ou dans le mélange de fluides contenant le fluide d'échantillon, lorsque le résonateur acoustique (5) est rempli avec le fluide d'échantillon ou avec le mélange de fluides contenant le fluide d'échantillon,
un capteur acoustique (6, 6') permettant de mesurer un signal de réponse acoustique du résonateur acoustique (5),
dans lequel la source de rayonnement (3), au moins au nombre de une, et le résonateur acoustique (5) sont formés et agencés de telle manière que le premier rayonnement électromagnétique (1) frappe le segment de surface (9) de l'élément d'absorption (7),
**caractérisé en ce que**
le dispositif est conçu de telle manière
que l'on détermine au moins une amplitude (A) ou une phase (ϕ) du signal de réponse acoustique (10), et
que l'on détermine une propriété du résonateur acoustique (5), une des étapes suivantes ou les deux étapes suivantes étant prévues, qui consistent à :
déterminer une fréquence de résonance du résonateur acoustique (5) à partir d'au moins l'amplitude (A) ou la phase (ϕ),
f) déterminer une propriété d'amortissement du résonateur acoustique (5).

13. Dispositif selon la revendication 12, dans lequel une source de rayonnement (3, 4) permettant de générer un second rayonnement électromagnétique (2) est prévue,
dans lequel le résonateur acoustique (5) présente une première ouverture ou une première fenêtre (8) qui est au moins partiellement transparente au moins au second rayonnement électromagnétique (2), dans lequel le résonateur acoustique (5) et la source de rayonnement (3, 4) du second rayonnement électromagnétique (2) sont formés et agencés de telle manière que le second rayonnement électromagnétique (2) parvient dans le résonateur acoustique (5) par la première ouverture ou la première fenêtre (8).

14. Dispositif selon la revendication 13, dans lequel le résonateur acoustique (5) présente une seconde ouverture ou une seconde fenêtre (8') qui est au moins partiellement transparente au moins au second rayonnement électromagnétique (2), dans lequel le résonateur acoustique (5) et la source de rayonnement (3, 4) du second rayonnement électromagnétique (2) sont formés et agencés de telle manière que le second rayonnement électromagnétique (2) sort du résonateur acoustique (5) par la seconde ouverture ou la seconde fenêtre (8').

15. Dispositif selon l'une des revendications 12 à 14, dans lequel le résonateur acoustique est formé de telle manière que se forme une onde sonore stationnaire (10) présentant au moins un maximum de pression à l'intérieur du résonateur acoustique (5) du fait de l'irradiation du segment de surface (9) avec le premier rayonnement électromagnétique (1) lorsqu'un résonateur acoustique (5) est rempli avec le fluide d'échantillon, dans lequel le résonateur acoustique (5) et la source de rayonnement (3) du premier rayonnement électromagnétique (1) sont formés et agencés de telle manière que le segment de surface (9) irradié par le premier rayonnement électromagnétique (1) est agencé au niveau d'un emplacement qui est essentiellement identique à l'emplacement du maximum de pression de l'onde sonore stationnaire (10).

16. Dispositif selon l'une quelconque des revendications 12 à 15, dans lequel sont prévues une première source de rayonnement (3) permettant de générer le premier rayonnement électromagnétique (1) et une seconde source de rayonnement (4) séparée permettant de générer le second rayonnement électromagnétique (2), dans lequel la première source de rayonnement (3) est de manière préférée une LED dans le domaine spectral visible et la seconde source de rayonnement (4) est une LED dans le domaine spectral infrarouge.

17. Dispositif selon l'une des revendications 13 à 14 et 16, dans lequel la source de rayonnement (3) du premier rayonnement électromagnétique (1) est formée et agencée de telle manière que le premier rayonnement électromagnétique (1) pénètre dans le résonateur acoustique (5) par une ouverture ou une fenêtre (8), dans lequel la fenêtre (8), lorsqu'il s'agit d'une fenêtre, est au moins partiellement transparente aussi bien au premier qu'au second rayonnement électromagnétique (1, 2), ou, en variante, la source de rayonnement (3) du premier rayonnement électromagnétique (1) est formée et agencée de telle manière que le premier rayonnement électromagnétique (1) est généré à l'intérieur du résonateur acoustique (5).

18. Utilisation d'un dispositif selon l'une des revendications 12 à 17 pour la mesure des gaz d'échappement dans un véhicule automobile ou pour la mesure des polluants dans l'air ambiant.
